Europäisches Patentamt

European Patent Office

Office européen des brevets

(19)

(11) EP 0 692 751 B1

(12) **FASCICULE DE BREVET EUROPEEN**

(45) Date de publication et mention
de la délivrance du brevet:
**28.04.1999 Bulletin 1999/17**

(51) Int Cl.⁶: $G05B\ 13/02$

(21) Numéro de dépôt: **95401637.4**

(22) Date de dépôt: **07.07.1995**

(54) **Procédé et dispositif de régulation sur une plage admissible avec anticipation sur contextes utilisant la logique floue**

Vorhersagemethoden und unscharfe Logik verwendende Methode und Vorrichtung zur Regelung eines Parameters innerhalb eines zulässigen Bereichs

Method and device for regulating a parameter within an admissible range utilizing lock-ahead methods and fuzzy logic

(84) Etats contractants désignés:
**BE CH DE DK ES FR GB GR IE IT LI LU NL PT SE**

(30) Priorité: **11.07.1994 FR 9408524**

(43) Date de publication de la demande:
**17.01.1996 Bulletin 1996/03**

(73) Titulaire: **ELF AQUITAINE**
**92400 Courbevoie (FR)**

(72) Inventeurs:
• **Chebre, Mériam**
**F-69110 Sainte Foy Les Lyon (FR)**
• **Beauchene, Jean-Pierre**
**F-44260 La Chapelle Launay (FR)**

(74) Mandataire: **Boillot, Marc**
**Elf Exploration Production**
**Département Propriété Industrielle**
**Tour Elf**
**EP/T/RD/DPI - Bureau 34 G 47**
**92078 Paris La Défense Cedex (FR)**

(56) Documents cités:
**EP-A- 0 290 889**          **DE-A- 3 911 186**
**US-A- 5 186 150**

• **SECOND IEEE INTERNATIONAL CONFERENCE ON FUZZY SYSTEMS, vol.1, 28 Mars 1993, USA pages 172 - 177 M.DE NEYER ET AL 'FUZZY INTEGRAL ACTION IN MODEL BASED CONTROL SYSTEMS'**

**Description**

## DOMAINE TECHNIQUE

La présente invention concerne un procédé de régulation consistant à maintenir, entre deux valeurs limites, la valeur d'une grandeur physique régulée soumise à des perturbations en modifiant une grandeur d'action. Selon ce procédé, on calcule la valeur de la grandeur d'action en utilisant les valeurs instantanées de la grandeur physique régulée, une variable secondaire élaborée liée au sens de variation de la grandeur physique régulée et une variable de contexte calculée à partir d'une combinaison de variables de détection qui sont représentatives des causes de perturbation de la grandeur physique régulée.

La présente invention concerne également un dispositif pour la mise en oeuvre de ce procédé.

Elle trouve son application dans toutes les industries, les laboratoires et les ateliers qui exploitent des unités de fabrication dans lesquelles interviennent des chaînes de régulation de grandeurs physiques à maintenir entre deux valeurs limites, alors qu'elles sont soumises à des perturbations et que l'on souhaite solliciter le moins possible la grandeur d'action pour stabiliser les flux de produits véhiculés entre deux sections de fabrication. Les industries pétrolières, chimiques, pétrochimiques, papetières, les usines de production d'énergie, les cimenteries, les verreries sont particulièrement concernées.

A titre d'exemple, on peut citer comme grandeurs physiques régulées les niveaux de liquide dans des réservoirs, des ballons, des fonds de colonnes, et les pressions de gaz en tête de colonnes de distillation et dans des réseaux de distribution.

## ETAT DE LA TECHNIQUE ANTERIEURE

Les procédés et dispositifs de régulation de grandeurs physiques connus ont pour objectif de maintenir la valeur d'une grandeur physique régulée à une valeur proche d'une valeur de consigne fixe, en modifiant la valeur d'une grandeur d'action. Si le processus dans lequel le dispositif de régulation intervient est perturbé, on constate que la variable d'action est soumise à d'importantes fluctuations, ce qui a pour conséquence de perturber le fonctionnement des installations situées en aval jusqu'à les rendre difficilement exploitables.

Il est également connu que, pour réguler une grandeur physique perturbée, on peut prendre en compte les valeurs des perturbations mesurables pour limiter l'amplitude des fluctuations de la grandeur physique régulée, mais ceci entraîne aussi des amplitudes très importantes de la variable d'action, avec les mêmes inconvénients.

Pour améliorer le fonctionnement des régulations conventionnelles, et notamment faciliter leur mise en oeuvre en ayant recours à des connaissances empiriques d'expertise qui peuvent remplacer des modélisations complexes, des méthodes mettant en oeuvre des mécanismes d'inférence floue ont été proposées. Une de ces méthodes est décrite dans l'article SIMPLIFY FUZZY CONTROL IMPLEMENTATION de K.E. STOLL, P.A.S. RALSTON et S. RAMAGANESAN publié dans la revue HYDROCARBON PROCESSING de juillet 1993.

Le procédé de régulation décrit dans ce document consiste à maintenir une grandeur physique régulée égale à une valeur de consigne fixe, en agissant sur une grandeur d'action. Sur de nombreux procédés, on constate que les amplitudes de variation de la grandeur d'action sont très importantes du fait qu'on cherche à obtenir un écart aussi faible que possible entre la grandeur physique régulée et la consigne.

De plus, ce procédé de régulation est très sensible aux perturbations qui résultent des variations des grandeurs physiques intervenant en amont dans la chaîne de fabrication, ce qui se traduit aussi par des variations d'amplitudes importantes de la grandeur d'action.

Ces variations d'amplitudes importantes perturbent à leur tour le fonctionnement des secteurs avals d'unités de fabrication jusqu'à les rendre inopérables, ce qui en final entraîne des pertes de production et une surcharge de travail importante pour les opérateurs de conduite.

## EXPOSE DE L'INVENTION

La présente invention a justement pour objet de remédier à ces inconvénients et notamment de fournir un procédé et un dispositif pour maintenir entre deux valeurs limites la valeur d'une grandeur physique régulée soumise à des perturbations en modifiant la valeur de commande d'un actionneur qui agit sur une grandeur d'action. Grâce à ce procédé et ce dispositif, les variations de la grandeur d'action, dues aux perturbations, sont réduites à des valeurs acceptables pour les installations en aval de l'actionneur.

A cette fin, la présente invention propose un procédé de régulation de la valeur d'une grandeur physique caractéristique du fonctionnement d'une unité de fabrication et dépendant d'une grandeur d'action représentée par la valeur de l'ouverture d'une vanne de réglage d'un débit de fluide circulant dans cette unité, ladite grandeur physique étant soumise à des perturbations, lequel procédé est du type consistant à modifier la valeur de la grandeur d'action, déterminée en utilisant la valeur instantanée de la grandeur physique régulée, pour maintenir entre deux valeurs limites, situées de part et d'autre d'une valeur nominale, la valeur de la grandeur physique régulée et il se caractérise en ce qu'on utilise également pour la régulation les valeurs d'une variable secondaire élaborée liée au sens de variation de la grandeur physique régulée et les valeurs d'une variable de contexte obtenue à partir d'au moins une variable de détection ou d'une combinaison de variables de détection, qui sont représentatives des grandeurs physiques à l'origine des perturbations de la grandeur physique régulée, et en ce qu'on met en oeuvre la régulation en définissant une plage de fonctionnement et une série de classes caractéristiques de fonctionnement avec des classes centrales et des classes extrêmes pour la grandeur physique régulée, pour la variable secondaire, pour la variable de contexte, pour la grandeur d'action, puis en définissant un jeu de règles de décisions, chaque règle consistant à associer une classe de la valeur de la grandeur physique régulée, une classe de la variable secondaire, une classe de la variable de contexte à une classe de la variable d'action, et en effectuant une inférence floue sur le jeu de règles de décisions à partir des valeurs de la grandeur physique régulée, de la variable secondaire et de la variable de contexte,pour obtenir la valeur de la grandeur d'action.

Selon une autre caractéristique, la présente invention propose un procédé caractérisé en ce que la variable secondaire est obtenue par dérivation par rapport au temps de la grandeur physique régulée.

Selon une autre caractéristique, la présente invention propose un procédé caractérisé en ce que la variable secondaire est obtenue par application de la formule suivante :

$$E_2 = \frac{(DN)^3}{|DN|}$$

dans laquelle

$E_2$ représente la variable secondaire ;
$DN$ représente la dérivée par rapport au temps de la grandeur physique régulée ;
$|DN|$ est la valeur absolue de $DN$.

Selon une autre caractéristique, la présente invention propose un procédé caractérisé en ce que la détermination de la variable de contexte comprend les étapes consistant à déterminer la valeur de chacune des variables de détection, à soumettre chacune de ces valeurs à une fonction de filtrage temporel adaptée, puis à combiner linéairement les valeurs ainsi obtenues, en les affectant d'un coefficient de pondération adapté.

Selon une autre caractéristique, la présente invention propose un procédé caractérisé en ce que la détermination de la variable de contexte comprend les étapes consistant à déterminer la valeur de chacune des variables de détection, à soumettre chacune de ces valeurs à une fonction de filtrage temporel adaptée, puis à décrire chacune des variables de détection filtrées sous forme d'une variable floue, à combiner les variables floues obtenues dans un jeu de règles de décision, et à effectuer une inférence floue sur ce jeu de règles pour obtenir la variable de contexte.

Selon une autre caractéristique, la présente invention propose un procédé caractérisé en ce qu'on décrit la grandeur physique régulée, la variable secondaire, la variable de contexte et les variables de détection sous forme de variables floues avec des profils de fonctions d'appartenance de classes triangulaires, les dites classes étant équiréparties sur chaque plage de fonctionnement.

Selon une autre caractéristique, la présente invention propose un procédé caractérisé en ce que la (ou les) classe(s) centrale(s) qui corresponde(nt) aux plages de fonctionnement nominal de la grandeur physique régulée sont décrites à l'aide de profils de fonctions d'appartenance de classes trapézoïdaux.

Selon une autre caractéristique, la présente invention propose un procédé, caractérisé en ce que les limites propres des classes extrêmes de la valeur de la grandeur physique régulée sont modifiables de manière à adapter le comportement de la régulation en phase perturbée, au voisinage des limites de la grandeur physique régulée.

Selon une autre caractéristique, la présente invention propose un procédé caractérisé en ce que les règles de décisions, qui mettent en oeuvre les classes centrales pour la variable secondaire et la variable de contexte, sont modifiées pour assurer un recentrage régulé autour de la valeur nominale de la grandeur physique régulée en régime non perturbé.

Selon une autre caractéristique, la présente invention propose un procédé caractérisé en ce que les règles de décision, qui mettent en oeuvre les classes extrêmes de la grandeur physique régulée, sont modifiées pour assurer un recentrage inconditionnel de la grandeur physique régulée à l'intérieur de sa plage de fonctionnement.

L'invention a aussi pour objet un dispositif de régulation pour maintenir entre deux valeurs limites une grandeur physique régulée soumise à des perturbations, en agissant sur une grandeur d'action, dont dépend la grandeur physique régulée, ledit dispositif comprenant :

- un capteur de mesure de la grandeur physique régulée fournissant sur une sortie un signal de mesure représentatif de la valeur instantanée de ladite grandeur,
- des capteurs de mesure de variables de détection représentatives de causes de perturbation de la valeur de la grandeur physique régulée, lesdits capteurs fournissant sur des sorties des signaux de mesure des dites variables,
- un actionneur commandable comportant une entrée de commande et une sortie reliée à un organe de réglage de la grandeur d'action,
- un circuit de mesure, relié à la sortie du capteur de mesure de la grandeur physique régulée et aux sorties des capteurs des variables de détection, qui délivre sur une sortie des signaux représentatifs respectivement de la grandeur physique régulée et des variables de détection,
- une unité de traitement reliée à la sortie du circuit de mesure fournissant sur une sortie un signal représentatif de la valeur calculée de la grandeur d'action,
- des moyens de dialogue reliés à l'unité de traitement,
- un circuit de commande comportant une entrée reliée à la sortie de l'unité de traitement et une sortie reliée à l'entrée de commande de l'actionneur commandable ;

et étant caractérisé en ce que l'unité de traitement comporte d'une part, des moyens de mémorisation, qui contiennent au moins une table de règles de décision et un programme de calcul de la grandeur d'action à partir de la valeur de la grandeur physique régulée, de la valeur d'une grandeur secondaire élaborée liée au sens de variation de ladite grandeur physique régulée et de la valeur d'une variable de contexte calculée à partir d'une combinaison de variables de détection qui sont représentatives des grandeurs physiques à l'origine des perturbations de la grandeur physique régulée, ledit programme mettant en oeuvre des mécanismes d'inférence floue et, d'autre part, un processeur d'exécution du programme de calcul.

Selon une autre caractéristique, la présente invention propose un dispositif caractérisé en ce que les moyens de mémorisation contiennent un programme de traitement qui consiste à calculer la variable de contexte en soumettant la valeur de chacune des variables de détection à une fonction de filtrage temporel adaptée, puis en combinant linéairement les valeurs ainsi obtenues en les affectant d'un coefficient de pondération.

Selon une autre caractéristique, la présente invention propose un dispositif caractérisé en ce que les moyens de mémorisation contiennent un programme de traitement qui consiste à calculer la variable de contexte en soumettant la valeur de chacune des variables de détection à une fonction de filtrage temporel adaptée puis à utiliser les valeurs ainsi obtenues dans un jeu de règles de décisions selon des mécanismes d'inférence floue.

Selon un premier mode de réalisation l'invention a pour objet un dispositif caractérisé en ce que le circuit de mesure, le circuit de commande et l'unité de traitement constituent un ensemble régulateur autonome.

Selon un deuxième mode de réalisation l'invention a pour objet un dispositif, caractérisé en ce que le circuit de mesure et le circuit de commande sont des éléments d'un système numérique de contrôle commande d'une unité de fabrication, l'unité de traitement est un ordinateur relié au dit système numérique de contrôle commande et les moyens de dialogue sont une console reliée à l'ordinateur. Selon un troisième mode de réalisation l'invention a pour objet un dispositif, caractérisé en ce que le circuit de mesure, le circuit de commande, la console de dialogue et l'unité de traitement sont des éléments d'un système numérique de contrôle commande d'une unité de fabrication.

**Brève description des dessins**

L'invention sera mieux comprise à l'aide des dessins annexés dans lesquels :

- la figure 1 représente schématiquement un régulateur conforme au descriptif de l'invention
- La figure 2 représente schématiquement une installation de distillation atmosphérique de pétrole brut sur laquelle le procédé et le dispositif objet de l'invention ont été appliqués.
- La figure 3 représente les profils de classes sur le niveau d'essence, qui est la grandeur physique régulée dans l'exemple décrit.
- La figure 4 représente le profil de classes sur la variable secondaire E2, sur la variable de CONTEXTE et sur la variation DF de la grandeur d'action F, pour l'exemple décrit.
- La figure 5 représente les tables de décision pour l'exemple décrit.
- La figure 6 représente le mécanisme de filtre temporel sur les variables de détection.
- La figure 7 représente l'opérateur MIN/MAX d'agrégation des prémisses, l'opérateur PRODUIT sur conclusions de règles, et la méthode du CENTRE DE GRAVITE pour la défuzzification.

**Exposé détaillé de l'invention**

D'une manière générale, le procédé et le dispositif de l'invention sont utilisés pour maintenir entre deux valeurs limites la valeur d'une grandeur physique régulée soumise à des perturbations, en agissant sur une grandeur d'action, de manière à minimiser les fluctuations de la grandeur d'action.

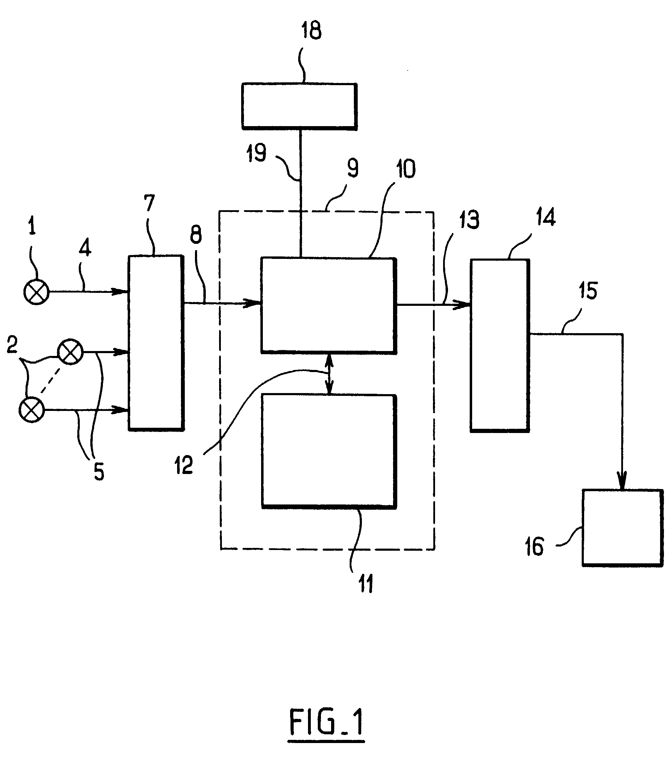

Le dispositif de régulation de l'invention, représenté sur la figure 1 comporte :

- Un capteur 1 de mesure de la grandeur physique régulée qui fournit sur une sortie 4 un signal électrique représentatif de ladite grandeur physique régulée ;
- Une pluralité de capteurs 2 de mesure des grandeurs physiques utilisées pour déterminer les variables de détection représentatives des causes de perturbation de la grandeur physique régulée, qui fournissent sur une pluralité de sorties 5 des signaux électriques représentatifs de variables de détection.
- Un circuit 7 de mesure, relié à la sortie 4 du capteur 1 et à la pluralité 5 des sorties de la pluralité de capteurs 2, muni d'une sortie 8 qui délivre sous forme digitale un signal électrique représentatif des valeurs de la grandeur physique régulée et des variables de détection.
- Une unité 9 de traitement reliée à la sortie 8 du circuit 7 de mesure, comprenant des moyens 11 de mémorisation et un processeur 10 d'exécution, munie d'une sortie 13 qui délivre un signal électrique représentatif de la valeur de la grandeur d'action.
- Un circuit 14 de commande, muni d'une entrée reliée à la sortie 13 de l'unité de traitement et d'une sortie 15.
- Un actionneur 16 commandable, muni d'une entrée de commande reliée à la sortie 15 du circuit 14.
- Des moyens 18 de dialogue reliés par la ligne 19 au processeur d'exécution.

Le capteur 1 et la pluralité de capteurs 2 de mesure délivrent des signaux électriques analogiques, représentatifs respectivement de la valeur de la grandeur physique régulée et des grandeurs physiques à l'origine des perturbations de la grandeur physique régulée.

Le circuit 7 de mesure transforme les signaux électriques analogiques délivrés par le capteur 1 et la pluralité de capteurs 2 en signaux électriques digitaux.

Le processeur 10 d'exécution de l'unité de traitement 9, reçoit par la ligne 8 les signaux électriques digitaux émis par le circuit 7 de mesure.

Pour obtenir la valeur de la sortie 13, le processeur 10 exécute périodiquement un programme contenu dans les moyens 11 de mémorisation.

Selon le procédé de l'invention, la valeur de la grandeur d'action est déterminée en utilisant :

- Les valeurs instantanées de la grandeur physique régulée mesurée par le capteur 1 ;
- Les valeurs d'une variable secondaire élaborée liée au sens de variation de la grandeur physique régulée, calculées par le processeur 10;
- Les valeurs d'une variable de contexte obtenues par le processeur 10, à partir des mesures délivrées par la pluralité de capteurs 2, représentatives des grandeurs physiques à l'origine des perturbations de la grandeur physique régulée.

Au travers des moyens 18 de dialogue, on définit, pour la grandeur physique régulée, pour la variable secondaire, pour la variable de contexte et pour la grandeur d'action, une plage de fonctionnement, c'est-à-dire un intervalle propre à chacune de ces grandeurs à l'intérieur duquel elles peuvent évoluer.

On définit en outre au travers d'un outil de dialogue spécifique non représenté sur la figure 1, une série de classes caractéristiques de fonctionnement et un jeu de règles de décision. Chaque règle associe une classe de la valeur de la grandeur physique régulée, une classe de la variable secondaire, une classe de la variable de contexte, à une classe de la variable d'action.

Pour obtenir ce jeu de règles de décisions, on commence par décrire le fonctionnement hors perturbation du régulateur à l'aide d'un premier jeu de règles qui combine les classes de variables instantanées et secondaires avec la variable d'action.

Ce premier jeu de règles ainsi obtenu est ensuite associé à la classe de la variable de contexte correspondant au fonctionnement hors perturbation.

Sachant que la grandeur d'action obéit à une loi de régulation stabilisante de la grandeur physique régulée, le sens de l'action est toujours choisi de telle sorte qu'il compense l'évolution mesurée par la grandeur secondaire, c'est-à-dire que le sens d'évolution de la grandeur mesurée induit par la grandeur d'action choisie sera toujours contraire à celui fourni par la grandeur secondaire.

On obtient les autres jeux de règles de décisions associées aux autres classes de la variable de contexte, correspondant au fonctionnement perturbé, en modifiant ce premier jeu de règles par adaptation des classes d'action utilisées, de telle sorte que l'on atténue l'amplitude de variation de la grandeur d'action, si les effets prévus par la variable de contexte sont opposés aux effets de la valeur de la grandeur physique régulée instantanée ou de celle de la variable secondaire. Les effets liés à la valeurs de la grandeur physique régulée correspondent à favoriser un recentrage autour de la valeur nominale de la grandeur régulée.

De cette manière, on obtient une stratégie d'action basée sur une dissymétrie de l'amplitude d'action en fonction du sens d'évolution de la grandeur physique régulée fourni par la grandeur secondaire, ce qui permet de favoriser l'évolution de la grandeur physique régulée dans le sens inverse au sens de la perturbation à venir, prévu par la variable de contexte tout en garantissant le maintien de la grandeur physique régulée dans la plage admissible.

Grâce à ces jeux de règles ainsi constitués, la grandeur physique régulée évolue entre les deux valeurs limites fixées et de manière à ce que les effets des perturbations mesurées, sur les variations de la grandeur d'action soient très atténués, par rapport à une régulation conventionnelle.

Toutes les tables correspondantes à ces jeux de règles de décision sont stockées dans les moyens de mémorisation 11.

Le processeur 10 dispose, sur la sortie 8 du circuit d'entrée 7, des valeurs de la grandeur physique régulée, mesurée par le capteur 1 et des valeurs des variables de détection mesurées par la pluralité de capteurs 2.

Le processeur 10 exécute un programme stocké dans les moyens de mémorisation grâce auquel il détermine d'abord la valeur de la variable secondaire et celle de la variable de contexte en appliquant des algorithmes adaptés, puis effectue une inférence floue sur le jeu de règles de décisions pour obtenir la valeur de la variable d'action.

Ensuite, le processeur 10 transmet au circuit 14 de commande la valeur codée de la grandeur d'action. Le circuit 14 transforme la valeur codée de la grandeur d'action en un signal électrique de commande qui active l'actionneur 16.

Selon une autre caractéristique de l'invention, la variable secondaire qui intervient dans la détermination de la valeur de la grandeur d'action est obtenue par dérivation par rapport au temps de la valeur de la grandeur physique régulée ce qui permet de prendre en compte la vitesse d'évolution de ladite grandeur.

Selon une autre caractéristique de l'invention, la variable secondaire, qui intervient dans la détermination de la valeur de la grandeur d'action, est obtenue par application de la formule suivante :

$$E_2 = \frac{(DN)^3}{|DN|}$$

dans laquelle :

E2  représente la valeur de la variable secondaire;
DN  représente la valeur de la dérivée par rapport au temps de la grandeur physique régulée ;
|DN|  est la valeur absolue de DN.

Selon une autre caractéristique de l'invention, la variable de contexte est obtenue en déterminant la valeur de chacune des variables de détection, puis en soumettant chacune de ces valeurs à une fonction de filtrage temporel et enfin en combinant linéairement les valeurs ainsi obtenues en les affectant d'un coefficient de pondération.

La fonction de filtrage temporel d'une variable de détection est réalisée en activant ladite variable dans le calcul de la variable de contexte, dès que des conditions d'activation de gel spécifiques sont remplies et pendant une durée donnée au cours de laquelle la variable de détection conserve la valeur obtenue au moment de l'activation des conditions de gel.

La durée de gel est déterminée expérimentalement elle est caractéristique de chaque variable de détection et spécifique à chaque application. De même pour le coefficient de pondération et les conditions d'activation.

Selon une autre caractéristique de l'invention, la variable de contexte est déterminée comme suit : on détermine la valeur de chacune des variables de détection, puis on soumet chacune d'elles à une fonction de filtrage temporel puis on décrit chacune des variables de détection filtrées sous forme d'une variable floue.

On combine les variables floues ainsi obtenues dans un jeu de règles de décisions sur lequel on effectue une inférence floue.

Grâce à cette caractéristique de l'invention, on ajuste de façon progressive le comportement de la régulation en fonction du contexte d'anticipation.

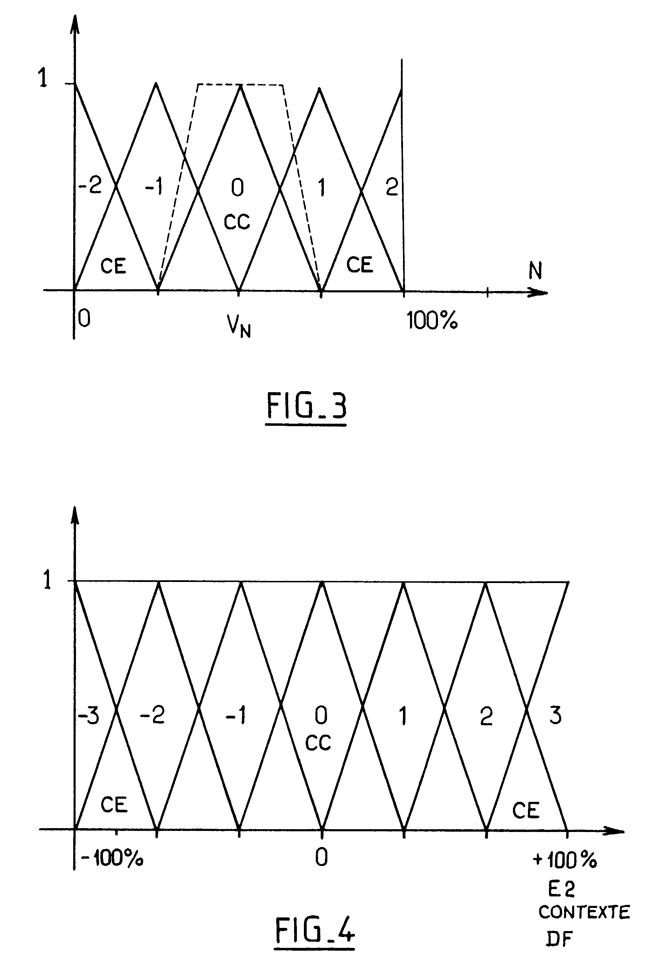

Selon une autre caractéristique de l'invention, la grandeur physique régulée, la variable secondaire, la variable de contexte, les variables de détection et la variable d'action sont décrites sous forme de variables floues avec des profils de fonctions d'appartenance de classe triangulaires tels que représentés sur les figures 3 et 4. Les classes étant équiréparties sur la plage de fonctionnement de chaque variable.

Sur les figures 3 et 4, les classes extrêmes des variables floues sont repérées CE, les classes centrales CC et la valeur nominale de la grandeur physique régulée VN.

Selon une autre caractéristique de l'invention, la ou les classes centrales qui correspondent à la(aux) plage (s) de fonctionnement nominal de la grandeur physique régulée sont décrites à l'aide de profils de fonctions d'appartenance de classe trapézoïdaux.

En remplaçant le profil de classe centrale triangulaire par un profil trapézoïdal, pour la grandeur physique régulée, on obtient une atténuation progressive de l'amplitude de la variable d'action dans un voisinage paramétrable autour de la valeur nominale de la grandeur physique régulée. Ce paramétrage est obtenu en ajustant la largeur des bases des trapèzes des classes trapézoïdales.

Selon une autre caractéristique de l'invention, les limites propres des classes extrêmes de la valeur de la grandeur physique régulée sont modifiées de manière à améliorer le comportement de la régulation en phase perturbée, quand cette grandeur physique régulée s'approche des valeurs limites qui lui ont été fixées.

Grâce à cette caractéristique, et compte tenu des classes d'action choisies dans les tables de décision lorsqu'on détecte une perturbation, on autorise la grandeur physique régulée à s'éloigner de sa valeur nominale pour obtenir un meilleur positionnement susceptible d'atténuer les effets attendus de la perturbation détectée. Pour obtenir ce résultat, on limite l'évolution de la grandeur physique régulée, dans une zone dont les limites, à l'intérieur de la plage de fonctionnement admissible, sont ajustées en modifiant les limites des classes extrêmes de la variable régulée.

Selon une autre caractéristique de l'invention, les règles de décisions qui mettent en oeuvre les classes centrales pour la variable secondaire et pour la variable de contexte, sont modifiées pour assurer un recentrage régulé autour de la valeur nominale de la grandeur physique régulée en régime non perturbé. Cette modification de règles se ramène à une modification des classes de la grandeur d'action, de telle sorte que l'amplitude de la variable d'action augmente au fur et à mesure qu'on se rapproche des limites de fonctionnement de la grandeur physique régulée. Ainsi, en régime non perturbé, la grandeur physique régulée est positionnée au voisinage de sa valeur nominale et se trouve de la sorte positionnée au mieux pour prendre en compte les futures perturbations.

Selon une autre caractéristique de l'invention, les règles de décision qui mettent en oeuvre les classes extrêmes de la grandeur physique régulée sont modifiées pour assurer un recentrage inconditionnel de la grandeur physique régulée, à l'intérieur de sa plage de fonctionnement au voisinage des limites. Ces modifications sur les règles concernées consistent à s'imposer des classes extrêmes sur la grandeur d'action indépendantes de la variable secondaire.

Selon un premier mode de réalisation du dispositif de régulation qui met en oeuvre le procédé objet de l'invention, représenté sur la figure 1, le circuit 7 d'entrée, l'unité 9 de traitement, les moyens 18 de dialogue et le circuit 14 de commande constituent un ensemble autonome.

Selon un deuxième mode de réalisation du dispositif, le circuit 7 d'entrée et le circuit 14 de commande sont des éléments d'un système numérique de contrôle commande d'une unité de fabrication, et l'unité 9 de traitement est un ordinateur relié audit système numérique de contrôle commande.

Selon un troisième mode de réalisation du dispositif, le circuit 7 de mesure, le circuit 14 de commande, les moyens 18 de dialogue et l'unité 9 de traitement sont des éléments d'un système numérique de contrôle commande.

## Exemple d'application de l'invention.

Le procédé et le dispositif de l'invention ont été appliqués à la régulation d'un niveau de ballon de tête d'une colonne de distillation atmosphérique de pétrole brut.

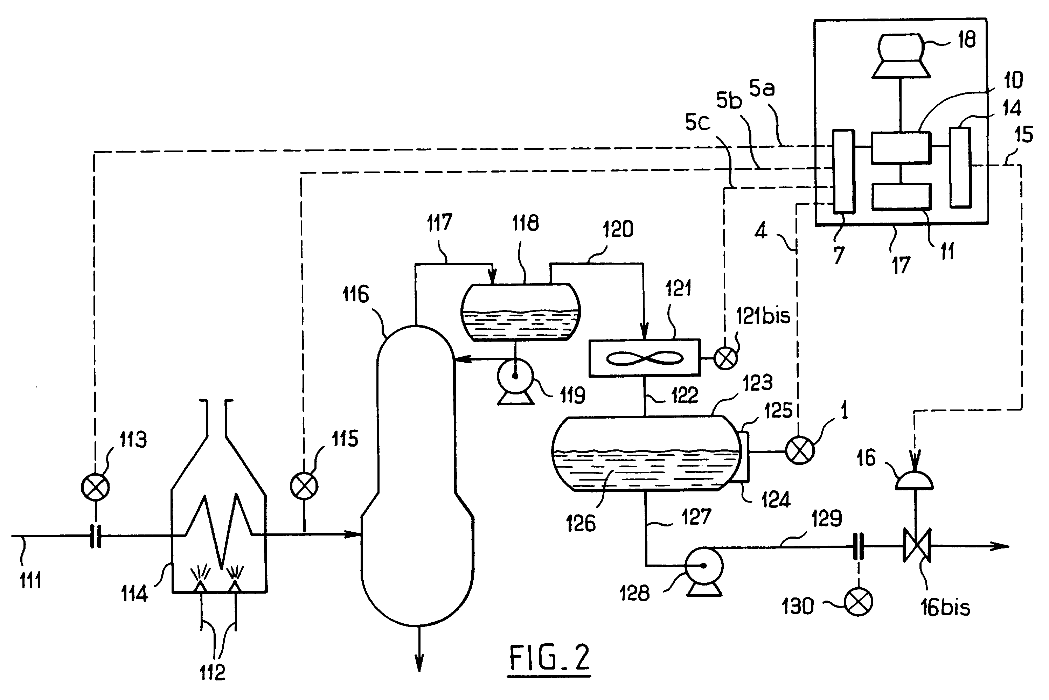

L'installation comporte les éléments suivants représentés sur la fig. 2 :

- une tuyauterie 111 d'alimentation en pétrole brut ;
- un capteur 113 mesure du débit d'alimentation en pétrole brut qui délivre sur une sortie 5a un signal électrique représentatif dudit débit ;
- un four 114 de préchauffe du pétrole brut ;
- une pluralité 112 de brûleurs ;
- un capteur 115 de mesure de la température du pétrole brut en sortie du four 114 qui délivre sur une sortie 5b un signal électrique représentatif de ladite température ;
- une colonne 116 de distillation de pétrole brut ;
- une ligne 117 d'extraction en tête de la colonne 116 ;
- un ballon 118 de reflux de tête de colonne ;
- une pompe 119 de reflux ;
- une ligne 120 d'extraction des vapeurs du ballon 118 ;
- une batterie 121 d'aéroréfrigérants alimentée par la ligne 120 ;
- une ligne 122 de sortie de la batterie 121 d'aéroréfrigérants.
- un capteur 121bis, d'états marche/arrêt des aéroréfrigérants représentatifs de la puissance de réfrigération de la batterie 121 ;
- un ballon 123 ;
- deux prises 124 et 125 de mesure du niveau d'essence 126 dans le ballon 123 ;

- un capteur 1 de mesure du niveau d'essence 126 dans le ballon 123 qui délivre sur une sortie 4 un signal électrique représentatif dudit niveau ;
- une ligne 127 de soutirage du ballon 123 ;
- une pompe 128 de soutirage de l'essence 126 ;
- une ligne 129 de refoulement de la pompe 128 ;
- un capteur 130 de mesure du débit d'essence dans la ligne 129 ;
- un régulateur 17 muni d'entrées auxquelles sont raccordées la sortie du capteur de mesure 1 du niveau de liquide dans le ballon 123, la sortie 5a du capteur 113 de mesure du débit de pétrole brut, la sortie 5b du capteur 115 de mesure de température et la sortie 5c du capteur 121bis de détermination des états de marche des aéroréfrigérants représentatifs de la puissance de réfrigération. En plus, le régulateur 17 délivre sur une sortie 15 un signal électrique représentatif de la valeur de la grandeur d'action.
- un actionneur 16 de commande d'une vanne 16 bis de réglage de débit d'essence dans ligne 129, dont l'entrée est reliée à la sortie 15 du régulateur 17.

Le régulateur 17 comprend un circuit d'entrée 7, un circuit 14 de commande comprenant lui-même des éléments du système numérique de contrôle commande de l'unité de distillation atmosphérique de pétrole brut, un microcalculateur muni d'un processeur 10 et de moyens de mémorisation 11, une console 18 de dialogue.

Avant la mise en oeuvre du procédé de régulation et du dispositif objet de l'invention, la régulation du niveau d'essence dans le ballon 123 était réalisée au moyen d'un régulateur algorithmique conventionnel. Cette régulation consistait à stabiliser le niveau dans une plage admissible, en agissant sur la vanne 16bis, pour régler le débit d'essence dans la ligne 129.

L'amplitude DF de la variation de l'action exercée sur la vanne 16bis, était déterminée périodiquement selon la formule suivante :

$$DF(NLIM) = \frac{DN^2}{(NLIM-N)} \frac{K}{(DT)}$$

dans laquelle les différents termes représentent :

N = niveau d'essence
NLIM = valeur limite supérieure ou inférieure de N
DN = variation de N entre l'instant d'échantillonnage courant et l'instant d'échantillonnage précédent
DT = la période d'échantillonnage
K = constante

NMAX et NMIN sont les valeurs extrêmes de NLIM

Si DN > 0 DF (NMAX) > 0
Si DN < 0 DF (NMIN < 0
Si DN = 0 DF = 0

Avec cet algorithme la grandeur d'action est proportionnelle au carré de la dérivée du niveau et inversement proportionnelle à l'écart par rapport à la borne visée. Le gain du contrôleur ainsi obtenu est non linéaire, dissymétrique selon le sens d'évolution du niveau.

De plus, au voisinage des bornes on s'impose une correction d'action d'amplitude maximale et de sens adéquat de manière à assurer un recentrage du niveau dans la plage admissible.

Les résultats étaient meilleurs que ceux obtenus avec un algorithme du type PID mais étaient insuffisants.

On constatait des fluctuations très importantes du débit d'essence dans la ligne 129, qui perturbaient le fonctionnement des unités avales et nuisaient à la qualité des produits fabriqués.

A l'origine de ces fluctuations, on trouvait les variations de débit d'alimentation en pétrole brut, les variations de composition du pétrole brut, les variations de température du pétrole brut en sortie du four 114 induite par exemple par l'arrêt d'un brûleur, les variations de la puissance de réfrigération générée par la batterie 121 d'aéroréfrigérants.

Quand ces perturbations apparaissaient, les limites dans lesquelles on s'autorisait à faire varier le niveau d'essence dans le ballon 123 étaient très rapidement atteintes et entraînaient des débouclages de la régulation en place, avec basculement automatique en régulation proportionnelle intégrale sur consigne fixe correspondant à la valeur nominale, ce qui avait pour effet d'accentuer les fluctuations du débit d'essence en sortie.

Le procédé et le dispositif objet de l'invention ont été mis en oeuvre pour éviter les débouclages de la régulation de niveau d'essence dans le ballon 123 et réduire les fluctuations du débit d'essence dans la ligne 129 en prenant en compte par anticipation les variations à l'origine des perturbations et en les traitant par des mécanismes d'inférence floue.

Pour cette application particulière, la grandeur physique régulée est le niveau d'essence dans le ballon 123 mesuré par le capteur 1, et la grandeur d'action est la position de la vanne 16bis de réglage du débit d'essence dans la ligne 129 mesuré au moyen du capteur 130.

Les variables de détection qui sont représentatives des grandeurs physiques à l'origine des perturbations du niveau de liquide dans le ballon 123 sont déterminées à partir :

- du débit de pétrole brut qui alimente le four 114, mesuré par le capteur 113,
- de la composition du pétrole brut représentée par le rendement en essence dudit pétrole déterminée en laboratoire et introduite dans les moyens de mémorisation 11 à l'aide de la console 18,
- de la température du pétrole brut en sortie du four 114 mesurée par le capteur 115,
- de la puissance de réfrigération de la batterie 121 représentée par le nombre d'aéroréfrigérants en service, déterminée par le capteur 121bis qui prend en compte les états des moteurs d'entraînement des aéroréfrigérants.

Ces quatre informations sont combinées pour obtenir la variable de contexte selon une formule qui sera précisée ci-après.

On définit préalablement les plages de fonctionnement suivantes :

- Pour la grandeur physique régulée qui est le niveau N d'essence dans le ballon 123 : 0%, 100 %, qui correspond à 25%, 75% de l'échelle physique,
- Pour la variable secondaire qui est la dérivée DN dans le temps du niveau N : -100%, +100%,
- Pour la variable de contexte : -100%, +100%,
- Pour la variation DF de la grandeur F d'action qui est la position de la vanne de régulation 16bis : -100%, +100%.

On définit ensuite une série de classes caractéristiques :

- 5 classes triangulaires équiréparties pour le niveau d'essence dans le ballon 113 telles que représentées sur la figure 3, la classe centrale CC représentée en pointillé pouvant être choisie en option de forme trapézoïdale,
- 7 classes triangulaires équiréparties, pour la variable secondaire E2 élaborée liée au sens de variation du niveau d'essence, pour la variable de contexte et pour la variable DF représentative des variations de la grandeur F d'action, telles que représentées sur la figure 4.

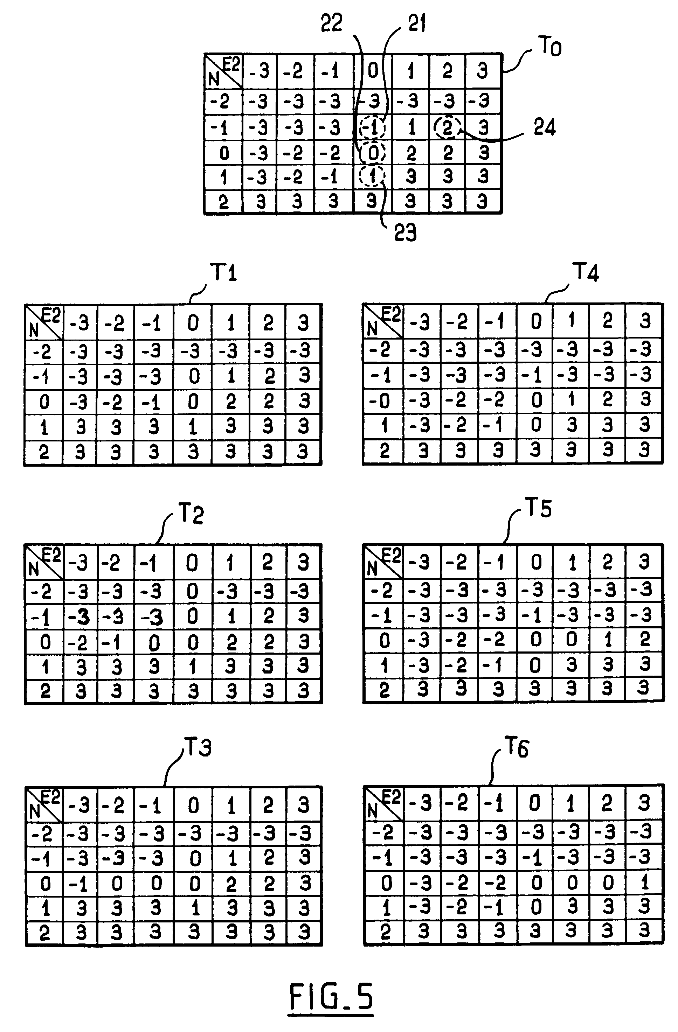

On définit ensuite un jeu de règles de décision sous forme d'une table tridimensionnelle comprenant 7 tables à deux dimensions telles que représentées figure 5.

Pour chaque classe de la variable de contexte, on définit une table des classes de la variable DF, soit 7 tables.

Chacune de ces 7 tables a deux entrées qui correspondent respectivement aux 5 classes du niveau N et aux sept classes de la variable secondaire E2 élaborée liée au sens de variation du niveau.

On a reproduit figure 5 les 7 tables. La table TO est celle associée à la classe 0 de la variable de contexte, qui représente le contexte nominal, c'est-à-dire l'absence de perturbation.

Les tables T1, T2 et T 3 sont associées aux classes 1, 2 et 3 de la variable de contexte. Elles sont représentatives de l'anticipation de hausse du niveau.

Les tables T4, T5 et T6 sont représentatives de l'anticipation de baisse du niveau.

A chaque case d'une table est associée une règle de décision.

Par exemple :

Si la variable de contexte appartient à la classe 0 (Table TO, contexte nominal) et si le niveau N appartient à la classe -1 (niveau assez bas) et si la variable secondaire E2 appartient à la classe 2 (niveau qui monte un peu), alors la correction de la variable d'action DF appartient à la classe 2, (la correction de débit sera positive moyenne).

La case associée à cette règle est référencée 24 dans la table TO de la figure 5, qui correspond au fonctionnement en contexte nominal.

La variable de contexte est déterminée au moyen de la formule suivante :

$$\text{CONTEXTE} = \Sigma\ B_i * E_{int}\ (C_i,\ D_i,\ T_i)$$

dans laquelle les différents termes ont la signification suivante :

Bi     poids relatifs des écarts détectés,

Ci     conditions d'activation des contributions d'écart,

$E_{int}$     écarts sur les variables de détection,

Ti     instants de début de détection d'écarts,

Di     durées spécifiques pour le filtrage temporel /gel d'activation des détections.

Dans notre exemple, nous appellerons les grandeurs physiques à l'origine des perturbations :

RDT     le rendement en essence du pétrole brut représentatif de la composition du pétrole brut,

FBR     le débit de pétrole brut,

TFOUR   la température du pétrole brut en sortie du four,

AERO    la puissance de réfrigération des aéroréfrigérants en service,

DRDT    écart de rendement essence entre le brut en cours de traitement et le brut précédemment traité,

DBFR DTFOUR représentent les écarts mesure consigne des grandeurs FBR et TFOUR par ailleurs régulées par des régulateurs conventionnels P,I.

DAERO représente la différence entre le nombre d'aéroréfrigérants en service à l'instant courant et l'instant d'échantillonnage précédent.

On trouve dans le tableau ci-après les valeurs des différents paramètres.

| Variables de détection | Rendements essence Ecart E1 = DRDT | Débit de brut Ecart E2= DFBR | Températures de four Ecart E3=DTFOUR | Aérofrigérants Ecart E4=DAERO |
|---|---|---|---|---|
| Echelles | +/- 15 % | +/- 30 % Fbrut SP | +/- 20°C | +/- 1 |
| Condition d'activation | Changement de brut (C1) | IDFBRI> Seuil DFBR (C2) | IDTFOURI>Seuil DTFour (C3) | DAERO ≠ 0 (C4) |
| Poids Bi sur écarts normalisés | 2 | 1 | 1/2 | 1/4 |
| Durées de gel | D1 = 4 h | D2 = 1 h | D3 = 1 h | D4 = 1/4 h |

Dans ce tableau, F brut SP est la valeur de consigne du régulateur de débit de pétrole brut à l'entrée de l'unité de distillation, SEUIL DFBR et SEUIL DTFOUR sont respectivement les valeurs de DFBR et DTFOUR au-delà desquelles les variables de détection sont activées.

Les changements de pétrole brut sont confirmés par l'opérateur de conduite de l'unité de distillation atmosphérique.

Le nombre d'aéroréfrigérants en service est 16.

Les valeurs Bi et Di sont déterminées expérimentalement.

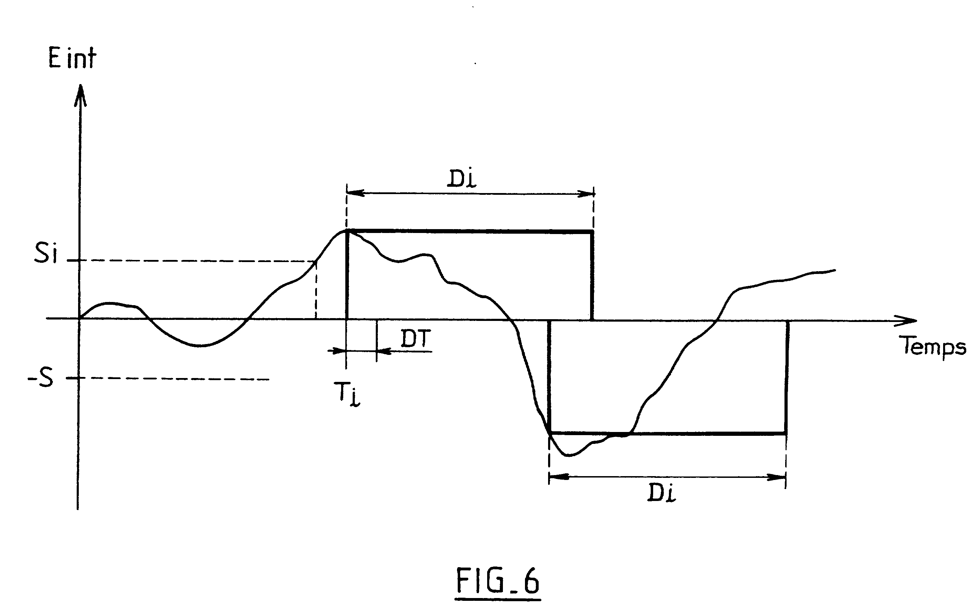

Si la condition d'activation Ci n'est pas vérifiée, la contribution $E_{int}$ dans la calcul du contexte est nulle. Au contraire, si Ci est vérifiée, l'écart $E_{int}$ est pris en compte de la manière suivante, illustrée par la figure 6.

La valeur de la contribution $E_{int}$ est figée à la valeur mesurée en début de détection Ti pendant la durée Di.

Si au cours de cette durée on détecte une dérive plus importante que la valeur fixée de $E_{int}$ depuis l'instant $T_i$ on réactualise la contribution $E_{int}$ à sa nouvelle valeur, qui sera à son tour gelée pendant une durée Di.

Pour assurer un recentrage régulé autour de la valeur nominale du niveau N de liquide dans le ballon, en régime non perturbé, les règles de décisions qui mettent en oeuvre les classes centrales pour la dérivée du niveau et la variable de contexte, sont modifiées.

Ces modifications apparaissent dans les cases 21, 22 et 23 de la table T0 de la figure 5 qui contiennent respectivement les valeurs -1, 0 et 1. En l'absence de modifications, ces valeurs auraient été égales à zéro.:

On effectue ensuite une inférence floue de la manière suivante :

- L'opérateur d'agrégation des prémisses, choisi pour combiner les conditions d'une règle floue active, est l'opérateur MIN/MAX. Cet opérateur permet de choisir, le plus petit degré d'appartenance associé aux classes d'entrées actives dans le cas où les conditions en prémisses des règles sont conjonctives et le plus grand degré d'appartenance quand les prémisses des règles sont des conditions disjonctives.

- On détermine les contributions sur la sortie en modifiant le profil de classe de conclusion de règle en effectuant le produit de la fonction d'appartenance de la classe par le degré d'appartenance obtenu par application de l'opérateur d'agrégation des prémisses.

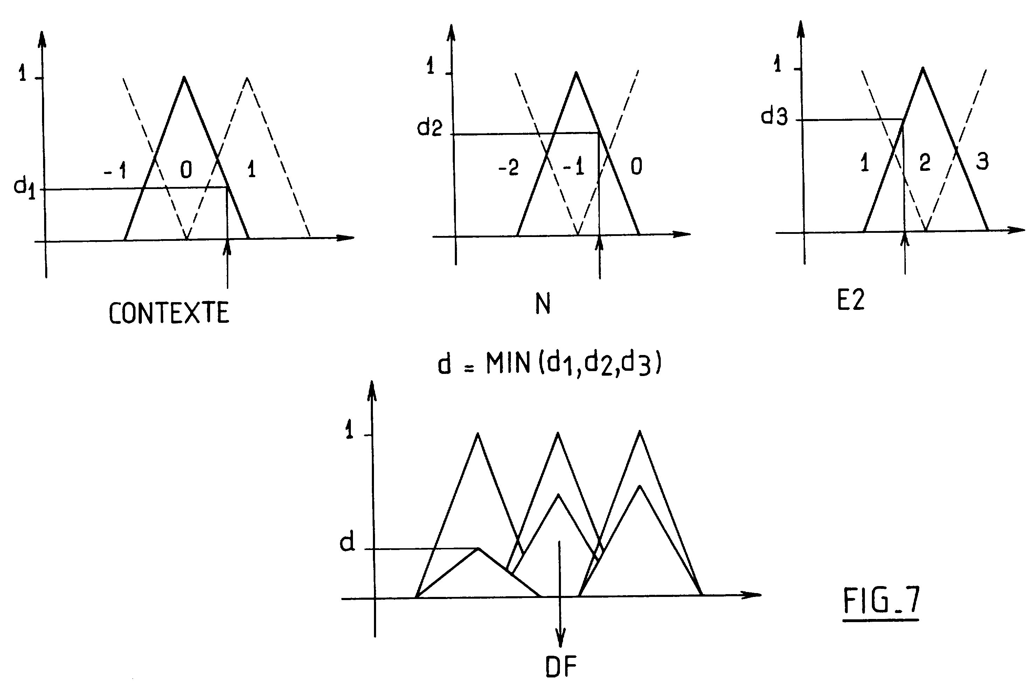

- La méthode de défuzzification choisie est la méthode du centre de gravité qui permet à partir des différents profils de classes de conclusion de règles obtenus, de calculer la valeur de la grandeur d'action.
- Le traitement de la règle, référencée 24 sur la figure 5 utilisant les opérateurs MIN et PRODUIT, est représenté sur la figure 7.

Dans notre exemple, la variable secondaire est obtenue à partir de la dérivée par rapport au temps du niveau d'essence, par la formule suivante :

$$E2 = \frac{(DN)^3}{|DN|}$$

dans laquelle les termes ont la signification suivante :

E2 : variable secondaire,
DN représente la dérivée par rapport au temps du niveau d'essence N dans le ballon,
IDNI représente la valeur absolue de DN.

Les résultats obtenus avec le régulateur objet de l'invention sont les suivants :

- Il n'y a plus de débouclage de la régulation, lors des changements de qualité du pétrole brut d'alimentation de l'unité de distillation.
- L'amplitude maximale de correction du débit d'essence a été ramenée de 1 t/mn à 300 kg/mn pour un débit d'essence compris entre 90 et 220 t/heure.

Exemple du résultat obtenu :

| | Débit d'essence en t/heure | |
|---|---|---|
| | Moyenne | Ecart type |
| Avec régulateur conventionnel | 158,3 | 4,74 |
| Avec régulateur objet de l'invention | 158,4 | 2,20 |

**Revendications**

1. Procédé de régulation de la valeur d'une grandeur physique caractéristique du fonctionnement d'une unité de fabrication et dépendant d'une grandeur d'action représentée par la valeur de l'ouverture d'une vanne de réglage d'un débit de fluide circulant dans cette unité, ladite grandeur physique étant soumise à des perturbations, lequel procédé est du type consistant à modifier la valeur de la grandeur d'action, déterminée en utilisant les valeurs instantanées de la grandeur physique régulée, pour maintenir entre deux valeurs limites, situées de part et d'autre d'une valeur nominale, la valeur de la grandeur physique régulée et il se caractérise en ce qu'on utilise également pour la régulation les valeurs d'une variable secondaire élaborée, liée au sens de variation de la grandeur physique régulée et les valeurs d'une variable de contexte obtenue à partir d'au moins une variable de détection ou d'une combinaison de variables de détection, qui sont représentatives des grandeurs physiques à l'origine des perturbations de la grandeur physique régulée, et en ce qu'on met en oeuvre la régulation en définissant une plage de fonctionnement et une série de classes caractéristiques de fonctionnement avec des classes centrales et des classes extrêmes pour la grandeur physique régulée, pour la variable secondaire, pour la variable de contexte, pour la grandeur d'action, puis en définissant un jeu de règles de décisions, chaque règle consistant à associer une classe de la valeur de la grandeur physique régulée, une classe de la variable secondaire, une classe de la variable de contexte à une classe de la variable d'action, et en effectuant une inférence floue sur le jeu de règles de décisions à partir des valeurs de la grandeur physique régulée, de la variable secondaire et de la variable de contexte,pour obtenir la valeur de la grandeur d'action.

**2.** Procédé de régulation selon la revendication 1, caractérisé en ce que la variable secondaire est obtenue par dérivation par rapport au temps de la grandeur physique régulée.

**3.** Procédé de régulation selon la revendication 1, caractérisé en ce que la variable secondaire est obtenue par application de la formule suivante :

$$E_2 = \frac{(DN)^3}{|DN|}$$

dans laquelle

$E_2$ représente la variable secondaire ;
DN représente la dérivée par rapport au temps de la grandeur physique régulée ;
IDNI est la valeur absolue de DN.

**4.** Procédé de régulation selon la revendication 1, caractérisé en ce que la détermination de la variable de contexte comprend les étapes consistant à déterminer la valeur de chacune des variables de détection, à soumettre chacune de ces valeurs à une fonction de filtrage temporel adaptée, puis à combiner linéairement les valeurs ainsi obtenues, en les affectant d'un coefficient de pondération adapté.

**5.** Procédé de régulation selon la revendication 1, caractérisé en ce que la détermination de la variable de contexte comprend les étapes consistant à déterminer la valeur de chacune des variables de détection, à soumettre chacune de ces valeurs à une fonction de filtrage temporel adaptée, puis à décrire chacune des variables de détection filtrées sous forme d'une variable floue, à combiner les variables floues obtenues dans un jeu de règles de décision, et à effectuer une inférence floue sur ce jeu de règles pour obtenir la variable de contexte.

**6.** Procédé de régulation selon l'une des revendications 1 à 5, caractérisé en ce qu'on décrit la grandeur physique régulée, la variable secondaire, la variable de contexte et les variables de détection sous forme de variables floues avec des profils de fonctions d'appartenance de classe triangulaires, les dites classes étant équiréparties sur chaque plage de fonctionnement.

**7.** Procédé de régulation selon l'une des revendications 1 à 6, caractérisé en ce que la ou (les) classe(s) centrale(s) qui corresponde(nt) aux plages de fonctionnement nominal de la grandeur physique régulée sont décrites à l'aide de profils de fonctions d'appartenance de classes trapézoïdaux.

**8.** Procédé de régulation selon l'une des revendications 1 à 7, caractérisé en ce que les limites propres des classes extrêmes de la valeur de la grandeur physique régulée sont modifiables de manière à adapter le comportement de la régulation en phase perturbée, au voisinage des limites de la grandeur physique régulée.

**9.** Procédé de régulation selon l'une des revendications 1 à 8, caractérisé en ce que les règles de décisions, qui mettent en oeuvre les classes centrales pour la variable secondaire et la variable de contexte, sont modifiées pour assurer un recentrage régulé autour de la valeur nominale de la grandeur physique régulée en régime non perturbé.

**10.** Procédé de régulation selon l'une des revendications 1 à 9, caractérisé en ce que les règles de décision, qui mettent en oeuvre les classes extrêmes de la grandeur physique régulée, sont modifiées pour assurer un recentrage inconditionnel de la grandeur physique régulée à l'intérieur de sa plage de fonctionnement.

**11.** Dispositif de régulation pour maintenir entre deux valeurs limites une grandeur physique régulée soumise à des perturbations, en agissant sur une grandeur d'action, dont dépend la grandeur physique régulée, ledit dispositif comprenant :

- un capteur de mesure de la grandeur physique régulée fournissant sur une sortie un signal de mesure représentatif de la valeur instantanée de ladite grandeur ;

- des capteurs de mesure permettant d'élaborer les variables de détection représentatives de causes de perturbation de la valeur de la grandeur physique régulée, lesdits capteurs fournissant sur des sorties des signaux de mesure des dites variables ;
- un actionneur commandable comportant une entrée de commande et une sortie reliée à un organe de réglage de la grandeur d'action ;
- un circuit de mesure, relié à la sortie du capteur de mesure de la grandeur physique régulée et aux sorties des capteurs des variables de détection, qui délivre sur une sortie des signaux représentatifs respectivement de la grandeur physique régulée et des variables de détection ;
- une unité de traitement reliée à la sortie du circuit de mesure fournissant sur une sortie un signal représentatif de la valeur calculée de la grandeur d'action ;
- des moyens de dialogue reliés à l'unité de traitement;
- un circuit de commande comportant une entrée reliée à la sortie de l'unité de traitement et une sortie reliée à l'entrée de commande de l'actionneur commandable ;

et étant caractérisé en ce que l'unité de traitement comporte d'une part, des moyens de mémorisation, qui contiennent au moins une table de règles de décision et un programme de calcul de la grandeur d'action à partir de la valeur de la grandeur physique régulée de la valeur d'une grandeur secondaire élaborée liée au sens de variation de ladite grandeur physique régulée et de la valeur d'une variable de contexte calculée à partir d'une combinaison de variables de détection qui sont représentatives des grandeurs physiques à l'origine des perturbations de la grandeur physique régulée, ledit programme mettant en oeuvre des mécanismes d'inférence floue, et, d'autre part, un processeur d'exécution du programme de calcul.

12. Dispositif de régulation selon la revendication 11, caractérisé en ce que les moyens de mémorisation contiennent un programme de traitement qui consiste à calculer la variable de contexte en soumettant la valeur de chacune des variables de détection à une fonction de filtrage temporel adaptée, puis en combinant linéairement les valeurs ainsi obtenues en les affectant d'un coefficient de pondération.

13. Dispositif de régulation selon la revendication 11, caractérisé en ce que les moyens de mémorisation contiennent un programme de traitement qui consiste à calculer la variable de contexte en soumettant la valeur de chacune des variables de détection à une fonction de filtrage temporel adaptée puis à utiliser les valeurs ainsi obtenues dans un jeu de règles de décisions selon des mécanismes d'inférence floue.

14. Dispositif de régulation selon l'une quelconque des revendications 11 à 13, caractérisé en ce que le circuit de mesure, le circuit de commande et l'unité de traitement constituent un ensemble régulateur autonome.

15. Dispositif de régulation selon l'une quelconque des revendications 11 à 13, caractérisé en ce que le circuit de mesure et le circuit de commande sont des éléments d'un système numérique de contrôle commande d'une unité de fabrication, l'unité de traitement est un ordinateur relié au dit système numérique de contrôle commande et les moyens de dialogue sont une console reliée à l'ordinateur.

16. Dispositif de régulation selon l'une quelconque des revendications 11 à 13, caractérisé en ce que le circuit de mesure, le circuit de commande, la console de dialogue et l'unité de traitement sont des éléments d'un système numérique de contrôle commande d'une unité de fabrication.

**Patentansprüche**

1. Verfahren zur Regelung des Wertes einer physikalischen Größe, die für den Betrieb einer Produktionsanlage kennzeichnend ist und von einer Wirkungsgröße abhängt, die den Wert der Öffnung eines Ventils zur Regelung des Durchsatzes eines in dieser Anlage strömenden Fluids darstellt, wobei diese physikalische Größe Störungen unterworfen ist und wobei das Verfahren darin besteht, daß man den Wert der Wirkungsgröße, der durch Verwendung der Momentanwerte der geregelten physikalischen Größe ermittelt wurde, modifiziert, um zwischen den beiden Grenzwerten beiderseits eines Nominalwertes den Wert der geregelten physikalischen Größe aufrechtzuerhalten, dadurch **gekennzeichnet**, daß man außerdem zur Regelung die Werte einer ermittelten zweiten Variablen, die für die Abänderung der geregelten physikalischen Größe eingesetzt wird, und die Werte einer Kontextvariablen verwendet, die aus wenigstens einer Nachweisvariablen oder einer Kombination von Nachweisvariablen erhalten wurde, die für physikalische Größen am Ausgangspunkt der Störungen der geregelten physikalischen Größe repräsentativ sind, und man die Regelung durchführt, indem man einen Betriebsbereich und eine Reihe von kennzeichnenden Betriebsklassen mit Mittelwert- und Extremwertklassen für die geregelte physikalische Größe, die sekundäre Variable, die Kontextvariable sowie die Wirkungsgröße definiert, dann ein Spiel von Entscheidungsregeln definiert, wobei jede Regel darin besteht, daß eine Klasse des Wertes der geregelten physikalischen Größe, eine Klasse der sekundären Variablen sowie eine Klasse der Kontextvariablen mit einer Klasse der Wirkungsvariablen verbunden wird, und man ausgehend von den Werten der geregelten physikalischen Größe, der sekundären Variablen und der Kontextvariablen eine annähernde Schlußfolgerung über das Spiel der Entscheidungsregeln zieht, um zum Wert der Wirkungsgröße zu gelangen.

2. Regelungsverfahren nach Anspruch 1, dadurch **gekennzeichnet,** daß man die sekundäre Variable durch Ableitung in bezug auf die Dauer der geregelten physikalischen Größe erhält.

3. Regelungsverfahren nach Anspruch 1, dadurch **gekennzeichnet,** daß man die sekundäre Variable durch Anwendung der Formel

$$E_2 = \frac{(DN)^3}{|DN|}$$

erhält, worin

$E_2$ die sekundäre Variable,
DN das Derivat in bezug auf die Dauer der geregelten physikalischen Größe und
IDNI den absoluten Wert von DN bedeuten.

4. Regelungsverfahren nach Anspruch 1, dadurch**gekennzeichnet,** daß die Ermittlung der Kontextvariablen darin besteht, daß man zuerst den Wert jeder Nachweisvariablen ermittelt, dann jeden dieser Werte einer zeitlich angepaßten Filterfunktion unterwirft und schließlich die auf diese Weise erhaltenen Werte linear kombiniert, indem man ihnen einen entsprechenden Bewertungsfaktor zuordnet.

5. Regelungsverfahren nach Anspruch 1, dadurch **gekennzeichnet,** daß die Ermittlung der Kontextvariablen darin besteht, daß man zuerst den Wert jeder Nachweisvariablen ermittelt, dann jeden dieser Werte einer zeitlich angepaßten Filterfunktion unterwirft, dann jede gefilterte Nachweisvariable in Form einer annähernden Variablen beschreibt, die in einem Spiel von Entscheidungsregeln erhaltenen annähernden Variablen kombiniert und bezüglich dieses Regelspiels eine annähernde Schlußfolgerung zieht, um zur Kontextvariablen zu gelangen.

6. Regelungsverfahren nach einem der Ansprüche 1 bis 5, dadurch **gekennzeichnet,** daß man die geregelte physikalische Größe, die sekundäre Variable, die Kontextvariable und die Nachweisvariablen in Form von annähernden Variablen mit Betriebsprofilen für die Zugehörigkeit zu Dreiecksklassen, wobei diese in jedem Betriebsbereich gleichmäßig verteilt sind, beschreibt.

7. Regelungsverfahren nach einem der Ansprüche 1 bis 6, dadurch **gekennzeichnet,** daß die zentrale(n) Klasse(n), die den Bereichen des Nominalbetriebs der geregelten physikalischen Größe entspricht (entsprechen), mit Hilfe von Betriebsprofilen für die Zugehörigkeit zu Trapezoidklassen beschrieben werden.

8. Regelungsverfahren nach einem der Ansprüche 1 bis 7, dadurch **gekennzeichnet,** daß die Grenzen der Extremwertklassen für die geregelte physikalische Größe so modifizierbar sind, daß das Verhalten der Regelung in der gestörten Phase in der Nachbarschaft der Grenzen der geregelten physikalischen Größe angepaßt wird.

9. Regelungsverfahren nach einem der Ansprüche 1 bis 8, dadurch **gekennzeichnet,** daß die Entscheidungsregeln, bei denen die Mittelwertklassen für die sekundäre Variable und die Kontextvariable verwendet werden, modifiziert werden, um eine geregelte Neuzentrierung um den Nominalwert der im nicht gestörten Betriebszustand geregelten physikalischen Größe zu gewährleisten.

10. Regelungsverfahren nach einem der Ansprüche 1 bis 9, dadurch **gekennzeichnet,** daß die Entscheidungsregeln, bei denen die Extremwertkassen der geregelten physikalischen Größe verwendet werden, modifiziert werden, um eine unbedingte Neuzentrierung der geregelten physikalischen Größe innerhalb ihres Betriebsbereichs zu gewährleisten.

11. Regelvorrichtung zur Aufrechterhaltung einer Störungen ausgesetzten geregelten physikalischen Größe zwischen zwei Grenzwerten, indem man auf eine Wirkungsgröße einwirkt, von der die geregelte physikalische Größe abhängt, wobei die Vorrichtung

- einen Fühler für die Messung der geregelten physikalischen Größe, der an einem Ausgang ein Meßsignal liefert, das den Momentanwert der Größe darstellt,
- Meßfühler, welche die Ermittlung der Nachweisvariablen, die für die Ursachen der Störung des Wertes der geregelten physikalischen Größe repräsentativ sind, ermöglichen und an den Ausgängen Meßsignale der Variablen liefern,
- ein steuerbares Stellglied, das einen Steuereingang und einen mit einem Glied für die Regelung der Wirkungsgröße verbundenen Ausgang umfaßt,
- einen Meßkreis, der mit dem Ausgang des Fühlers für die Messung der geregelten physikalischen Größe und den Ausgängen der Meßfühler der Nachweisvariablen verbunden ist und an einem Ausgang Signale liefert, die für die geregelte physikalische Größe und die Nachweisvariablen repräsentativ sind,
- eine Verarbeitungseinheit, die mit dem Ausgang des Meßkreises verbunden ist und an einem Ausgang ein Signal liefert, das für den berechneten Wert der Wirkungsgröße repräsentativ ist,
- Dialogmittel, die mit der Verarbeitungseinheit verbunden sind und
- einen Steuerkreis umfaßt, der einen Eingang, der mit dem Ausgang der Verarbeitungseinheit verbunden ist, und einen Ausgang aufweist, der mit dem Steuereingang des steuerbaren Stellgliedes verbunden ist,

und dadurch **gekennzeichnet** ist, daß die Verarbeitungseinheit einerseits Speicherungsmittel, die wenigstens eine Tafel für Entscheidungsregeln und ein Programm zur Berechnung der Wirkungsgröße, ausgehend vom Wert der geregelten physikalischen Größe, dem Wert einer ermittelten sekundären Größe, die für die Abänderung der geregelten physikalischen Größe eingesetzt wird, und dem Wert einer Kontextvariablen, der ausgehend von einer Kombination von Nachweisvariablen, die für die physikalischen Größen am Ausgangspunkt der Störungen der geregelten physikalischen Größe repräsentativ sind, berechnet wurde, enthalten, wobei das Programm Mechanismen der annähernden Schlußfolgerung verwendet, und andererseits einen Prozessor für die Ausführung des Rechenprogramms umfaßt.

12. Regelvorrichtung nach Anspruch 11, dadurch **gekennzeichnet,** daß die Speicherungsmittel ein Verarbeitungsprogramm umfassen, das darin besteht, daß man die Kontextvariable berechnet, indem man den Wert jeder Nachweisvariablen einer zeitlich angepaßten Filterfunktion unterwirft und dann die auf diese Weise erhaltenen Werte linear miteinander kombiniert, indem man ihnen einen Bewertungsfaktor zuordnet.

13. Regelvorrichtung nach Anspruch 11, dadurch **gekennzeichnet,** daß die Speicherungsmittel ein Verarbeitungsprogramm umfassen, das darin besteht, daß man die Kontextvariable berechnet, indem man den Wert jeder Nachweisvariablen einer zeitlich angepaßten Filterfunktion unterwirft und die auf diese Weise erhaltenen Werte in einem Spiel von Entscheidungsregeln entsprechend den Mechanismen der annähernden Schlußfolgerung verwendet.

14. Regelvorrichtung nach einem der Ansprüche 11 bis 13, dadurch **gekennzeichnet,** daß der Meßkreis, der Steuerkreis und die Verarbeitungseinheit zusammen eine autonome Regelvorrichtung bilden.

15. Regelvorrichtung nach einem der Ansprüche 11 bis 13, dadurch **gekennzeichnet,** daß der Meßkreis und der Steuerkreis Teile eines numerischen Systems zur Steuerungskontrolle einer Produktionsanlage, die Verarbeitungseinheit ein mit dem numerischen System zur Steuerungskontrole verbundener Rechner und die Dialogmittel ein mit dem Rechner verbundener Monitor sind.

16. Regelvorrichtung nach einem der Ansprüche 11 bis 13, dadurch **gekennzeichnet,** daß der Meßkreis, der Steuerkreis, der Dialogmonitor und die Verarbeitungseinheit Teile eines numerischen Systems zur Steuerungskontrolle einer Produktionsanlage sind.

## Claims

1. Method for controlling the value of a physical quantity characteristic of the operation of a manufacturing unit and dependent upon an action quantity represented by the value of the opening of a valve which regulates the flow of a fluid circulating in said unit, said physical quantity being subjected to disturbances, where said method is of the type consisting in altering the value of the action quantity, which is ascertained using the instantaneous values of the controlled physical quantity, in order to maintain the value of the controlled _physical quantity between two limiting values located to either side of a nominal value, characterised in that said method of control likewise utilises the values of a worked secondary variable linked to the direction in which the controlled physical quantity varies, and the values of a contextual variable obtained from at least one detection variable or from a combination of detection variables, which are representative of the physical quantities that are causing the disturbances to the controlled physical quantity, and further characterised in that the control is implemented by defining an operating range and a series of characteristic operating categories with central categories and extreme categories for the controlled physical quantity, for the secondary variable, for the contextual variable, and for the action quantity, then defining a set of decision rules, each rule consisting in associating a category of the value of the controlled physical quantity, a category of the secondary variable, a category of the contextual variable and a category of the action variable, and making a fuzzy inference about the set of decision rules from the values of the controlled physical quantity, of the secondary variable and of the contextual variable, so as to obtain the value of the action quantity.

2. Method of control according to claim 1, characterised in that the secondary variable is obtained by derivation of the controlled physical quantity relative to time.

3. Method of control according to claim 1, characterised in that the secondary variable is obtained by applying the following formula:

$$E_2 = \frac{(DN)^3}{|DN|}$$

in which

$E_2$ represents the secondary variable;
DN represents the derivative of the controlled physical quantity relative to time;
IDNI is the absolute value of DN.

4. Method of control according to claim 1, characterised in that the determination of the contextual variable comprises the steps of ascertaining the value of each of the detection variables, submitting each of these values to an adjusted temporal filtering function, and then linearly combining the values thereby obtained, modifying them by an adjusted weighting coefficient.

5. Method for control according to claim 1, characterised in that the determination of the contextual variable comprises the steps of ascertaining the value of each of the detection variables, submitting each of these values to an adjusted temporal filtering function, next describing each of the filtered detection variables in the form of a fuzzy variable, combining the fuzzy variables obtained in a set of decision rules, and making a fuzzy inference about said set of rules so as to obtain the contextual variable.

6. Method for control according to any of claims 1 to 5, characterised in that the controlled physical quantity, the secondary variable, the contextual variable and the detection variables are described in the form of fuzzy variables with triangular category membership function profiles, said categories being uniformly distributed over each operating range.

7. Method of control according to any of claims 1 to 6, characterised in that the central category or categories corresponding to the ranges of nominal operation of the controlled physical quantity are described with the help of trapezoidal category membership function profiles.

8. Method of control according to any of claims 1 to 7, characterised in that the particular limits of the extreme categories of the value of the controlled physical quantity can be modified in such a way that the control characteristics in the disturbed state are adjusted to the neighbourhood of the limits of the controlled physical quantity.

9. Method of control according to any of claims 1 to 8, characterised in that the decision rules that bring into play the central categories in respect of the secondary variable and the contextual variable are modified so as to assure controlled recentring around the nominal value of the controlled physical quantity in the undisturbed state.

10. Method of control according to any of claims 1 to 9, characterised in that the decision rules that implement the extreme categories of the controlled physical variable are modified so as to assure unconditional recentring of the controlled physical quantity within the operating range thereof.

11. Control device for maintaining between two limiting values a controlled physical quantity subjected to disturbances, by influencing an action quantity upon which the controlled physical quantity depends, said device comprising:

- a transducer measuring the controlled physical quantity, providing at an output a measurement signal representative of the instantaneous value of said quantity;
- measurement transducers enabling the detection variables representative of causes of disturbance to the value of the controlled physical quantity to be worked, said transducers providing at outputs measurement signals for said variables;
- a controllable actuator having a control input and an output connected to a means for controlling the action quantity;
- a measurement circuit linked to the output of the transducer measuring the controlled physical quantity and to the outputs of the transducers in respect of the detection variables, said circuit emitting at an output signals respectively representative of the controlled physical variable and of the detection variables;
- a processing unit linked to the output of the measurement circuit and providing at an output a signal representative of the computed value of the action quantity;
- interactive means linked to the processing unit;
- a control circuit having an input linked to the output of the processing unit and an output linked to the control input of the controllable actuator;

and being characterised in that the processing unit has, on the one hand, storage means which contain at least one table of decision rules and a routine for computing the action quantity from the value of the controlled physical quantity, the value of a worked secondary quantity linked to the direction of variation of said controlled physical quantity, and the value of a contextual variable computed from a combination of detection variables which are representative of physical quantities causing the disturbances to the controlled physical quantity, said routine bringing into play fuzzy inference mechanisms, and, on the other hand, a processor for executing the computing routine.

12. Control device according to claim 11, characterised in that the storage means contain a processing routine which consists in computing the contextual variable by submitting the value of each of the detection variables to an adjusted temporal filtering function and then linearly combining the values thereby obtained, modifying them by a weighting coefficient.

13. Control device according to claim 11, characterised in that the storage means contain a processing routine which consists in computing the contextual variable by submitting the value of each of the detection variables to an adjusted temporal filtering function and then using the values thereby obtained in a set of decision rules in accordance with fuzzy inference mechanisms.

14. Control device according to any one of claims 11 to 13, characterised in that the measurement circuit, the control circuit and the processing unit constitute a self-contained control unit.

15. Control device according to any one of claims 11 to 13, characterised in that the measurement circuit and the control circuit are elements of an N/C control scheme in respect of a manufacturing unit, the processing unit is a computer linked to said N/C control scheme, and the interactive means are a console linked to the computer.

16. Control device according to any one of claims 11 to 13, characterised in that the measurement circuit, the control circuit, the interactive console and the processing unit are elements of an N/C control scheme in respect of a manufacturing unit.

FIG.1

FIG. 2

FIG.3

FIG.4

**T0**

| N\E2 | -3 | -2 | -1 | 0 | 1 | 2 | 3 |
|------|----|----|----|----|----|----|----|
| -2 | -3 | -3 | -3 | -3 | -3 | -3 | -3 |
| -1 | -3 | -3 | -3 | (-1) | 1 | (2) | 3 |
| 0 | -3 | -2 | -2 | (0) | 2 | 2 | 3 |
| 1 | -3 | -2 | -1 | (1) | 3 | 3 | 3 |
| 2 | 3 | 3 | 3 | 3 | 3 | 3 | 3 |

22  21  To  24  23

**T1**

| N\E2 | -3 | -2 | -1 | 0 | 1 | 2 | 3 |
|------|----|----|----|----|----|----|----|
| -2 | -3 | -3 | -3 | -3 | -3 | -3 | -3 |
| -1 | -3 | -3 | -3 | 0 | 1 | 2 | 3 |
| 0 | -3 | -2 | -1 | 0 | 2 | 2 | 3 |
| 1 | 3 | 3 | 3 | 1 | 3 | 3 | 3 |
| 2 | 3 | 3 | 3 | 3 | 3 | 3 | 3 |

**T4**

| N\E2 | -3 | -2 | -1 | 0 | 1 | 2 | 3 |
|------|----|----|----|----|----|----|----|
| -2 | -3 | -3 | -3 | -3 | -3 | -3 | -3 |
| -1 | -3 | -3 | -3 | -1 | -3 | -3 | -3 |
| -0 | -3 | -2 | -2 | 0 | 1 | 2 | 3 |
| 1 | -3 | -2 | -1 | 0 | 3 | 3 | 3 |
| 2 | 3 | 3 | 3 | 3 | 3 | 3 | 3 |

**T2**

| N\E2 | -3 | -2 | -1 | 0 | 1 | 2 | 3 |
|------|----|----|----|----|----|----|----|
| -2 | -3 | -3 | -3 | 0 | -3 | -3 | -3 |
| -1 | -3 | -3 | -3 | 0 | 1 | 2 | 3 |
| 0 | -2 | -1 | 0 | 0 | 2 | 2 | 3 |
| 1 | 3 | 3 | 3 | 1 | 3 | 3 | 3 |
| 2 | 3 | 3 | 3 | 3 | 3 | 3 | 3 |

**T5**

| N\E2 | -3 | -2 | -1 | 0 | 1 | 2 | 3 |
|------|----|----|----|----|----|----|----|
| -2 | -3 | -3 | -3 | -3 | -3 | -3 | -3 |
| -1 | -3 | -3 | -3 | -1 | -3 | -3 | -3 |
| 0 | -3 | -2 | -2 | 0 | 0 | 1 | 2 |
| 1 | -3 | -2 | -1 | 0 | 3 | 3 | 3 |
| 2 | 3 | 3 | 3 | 3 | 3 | 3 | 3 |

**T3**

| N\E2 | -3 | -2 | -1 | 0 | 1 | 2 | 3 |
|------|----|----|----|----|----|----|----|
| -2 | -3 | -3 | -3 | -3 | -3 | -3 | -3 |
| -1 | -3 | -3 | -3 | 0 | 1 | 2 | 3 |
| 0 | -1 | 0 | 0 | 0 | 2 | 2 | 3 |
| 1 | 3 | 3 | 3 | 1 | 3 | 3 | 3 |
| 2 | 3 | 3 | 3 | 3 | 3 | 3 | 3 |

**T6**

| N\E2 | -3 | -2 | -1 | 0 | 1 | 2 | 3 |
|------|----|----|----|----|----|----|----|
| -2 | -3 | -3 | -3 | -3 | -3 | -3 | -3 |
| -1 | -3 | -3 | -3 | -1 | -3 | -3 | -3 |
| 0 | -3 | -2 | -2 | 0 | 0 | 0 | 1 |
| 1 | -3 | -2 | -1 | 0 | 3 | 3 | 3 |
| 2 | 3 | 3 | 3 | 3 | 3 | 3 | 3 |

## FIG. 5

FIG.6

EP 0 692 751 B1

CONTEXTE

-1  0  1

N

-2  -1  0

E2

1  2  3

$$d = MIN(d_1, d_2, d_3)$$

DF

FIG. 7